# FASCICULE DE BREVET EUROPEEN

(11) **EP 4 489 996 B1**
(45) Date de publication et mention de la délivrance du brevet: **14.01.2026**
(21) Numéro de dépôt: 23707433.1
(22) Date de dépôt: 08.02.2023
(51) Int. Cl.: B60R 19/48, B60R 19/52, B60K 11/08

(54) **ELEMENT D'ETANCHEITE POUR ECHANGEUR DE CHALEUR DE VEHICULE AUTOMOBILE**
DICHTELEMENT FÜR EINEN KRAFTFAHRZEUGWÄRMETAUSCHER
SEALING ELEMENT FOR A MOTOR VEHICLE HEAT EXCHANGER

(30) Priorité: 07.03.2022 FR 2201954
(43) Date de publication de la demande: 15.01.2025
(73) Titulaire: Stellantis Auto SAS, 78300 Poissy (FR)
(72) Inventeur: BOUDAN, Julien, 91210 DRAVEIL (FR); ROYER, Guillaume, 91680 BRUYERES LE CHATEL (FR); PERON, Rodolphe, 95220 HERBLAY SUR SEINE (FR)
(74) Mandataire: BCIP
(86) Numéro de dépôt international: PCT/FR2023/050174
(87) Numéro de publication internationale: WO 2023/170352

(56) Documents cités:
- EP-A1- 2 332 764
- FR-B1- 2 804 638
- US-A1- 2021 245 690

## Description

La présente invention revendique la priorité de la demande française 2201954 déposée le 7 mars 2022.

L'invention concerne un élément d'étanchéité pour véhicule. En particulier, l'invention a trait à un élément d'étanchéité entre un échangeur de chaleur et un pare-chocs de véhicule automobile. L'invention propose également un véhicule automobile comprenant un tel élément d'étanchéité. L'invention concerne également un procédé de montage de véhicule comprenant un tel élément d'étanchéité.

Le bloc façade avant d'un véhicule ferme en avant le compartiment moteur et a pour fonction d'en réguler la température. Ce bloc est généralement composé d'une armature portant un échangeur thermique, tel qu'un radiateur de circuit de refroidissement de moteur ou de circuit de refroidissement d'air de suralimentation, ou encore un condensateur de circuit de climatisation de l'habitacle. Ce bloc façade avant est fixé à la structure du véhicule et plus particulièrement aux brancards avant droit et gauche s'étendant de part et d'autre du moteur. Cette fixation se fait par l'intermédiaire de deux éléments appelés « appuis façade » portant chacun un renfort sur lequel est fixé ledit bloc.

L'armature du bloc façade avant porte également le pare-chocs avant du véhicule. Le pare-chocs d'un véhicule automobile comprend généralement une peau de pare-chocs extérieure supportée par ladite armature. Cette armature présente généralement un pied central qui contribue au maintien du pare-chocs, et à la précision de son positionnement.

Dans la conception des véhicules actuels, le pare-chocs doit également répondre aux contraintes liées au « choc piéton ». Le « choc piéton » correspond à un choc selon lequel le pare-chocs vient percuter la jambe d'un piéton sensiblement entre le genou et la cheville, en évitant que la jambe dudit piéton ne reste sous le véhicule. Par ailleurs, le pare-chocs permet d'absorber des chocs à faible vitesse sans nécessiter de réparation du véhicule associé.

Ces contraintes impliquent, entre autres, de laisser un volume libre entre les éléments de carrosserie comme la peau de pare-chocs, et d'éventuels points durs à l'intérieur du véhicule se trouvant derrière cet élément de carrosserie.

Afin de canaliser le flux d'air entrant via la grille de pare-chocs avant, le véhicule présente un cadre d'étanchéité conduisant jusqu'à l'échangeur de chaleur. Ce cadre d'étanchéité permet de canaliser le flux d'air traversant l'échangeur de chaleur et donc d'améliorer l'efficacité thermique de ce dernier.

Pour des raisons d'intégration, le pied central de l'armature de pare-chocs traverse le cadre d'étanchéité qui présente une échancrure formée sur son bord avant. Cette échancrure de montage est configurée afin de se chausser autour du pied central selon un mouvement de translation longitudinale. Dans certaines configurations, la profondeur de l'encoche est supérieure à l'épaisseur longitudinale du pied central. Ainsi, un passage demeure dans l'encoche lorsque le pied central occupe sa position montée. Or, la subsistance de ce passage dans l'encoche engendre des fuites qui réduisent le flux d'air disponible. Par ailleurs ces fuites forment des flux d'air parasites qui génèrent certains bruits néfastes à la qualité perçue du véhicule. En outre, ces flux d'air augmentent la trainée et donc la consommation en énergie du véhicule.

Ainsi il y a un besoin de contrer cette perte de flux d'air exploitable. La solution simple consistant à fixer une pièce rapportée sur le cadre d'étanchéité, au niveau de l'échancrure de montage et contre le pied central, ne serait pas satisfaisante. En effet, elle nécessiterait une opération de montage supplémentaire dans un environnement peu accessible. Par ailleurs, elle impose de gérer une nouvelle référence.

L'invention a pour objectif de répondre à au moins un des problèmes ou inconvénients rencontrés dans l'art antérieur. En particulier, l'invention a pour objectif de proposer un cadre d'étanchéité améliorant la canalisation des flux d'air entrant dans le véhicule. L'invention a également pour objectif d'optimiser la gestion des flux et la facilité d'assemblage d'un cadre d'étanchéité de véhicule automobile. L'invention a également pour objectif de réduire les vibrations d'un pied central d'armature introduit dans une échancrure de montage.

A cet effet, et selon un premier aspect, l'invention a pour objet un élément d'étanchéité de véhicule, ledit élément d'étanchéité présentant une paroi formant un cadre, la paroi présentant un bord d'étanchéité et une échancrure de montage dans le bord d'étanchéité, ladite échancrure de montage comprenant une entrée et un fond à l'opposé de l'entrée, remarquable en ce que le bord d'étanchéité comprend au moins un volet d'obturation mobile entre une configuration ouverte ; et une configuration traversante dans laquelle le au moins un volet traverse l'échancrure de montage au niveau de l'entrée, de manière à boucher partiellement l'échancrure de montage.

Préférentiellement, le ou les volets d'obturation comprend/comprennent au moins une charnière avec au moins une encoche.

Préférentiellement, le ou les volets d'obturation comprend/comprennent des moyens de maintien aptes à maintenir ledit au moins un volet d'obturation dans la configuration traversante.

Préférentiellement, l'échancrure de montage comprend deux bords opposés s'étendant de l'entrée au fond ; et au moins un volet d'obturation est dimensionné pour relier les deux bords opposés dans la configuration traversante et en se plaçant en appui sur l'un des deux bords.

Préférentiellement, l'échancrure de montage comprend deux bords opposés s'étendant de l'entrée au fond ; l'élément d'étanchéité comprenant deux volets d'obturation s'étendant chacun depuis l'un des bords opposés ; dans la configuration traversante les volets d'obturation sont dimensionnés pour être au moins partiellement superposés.

Préférentiellement, l'échancrure de montage comprend deux bords opposés s'étendant de l'entrée au fond ; le au moins un volet d'obturation comprenant deux volets d'obturation s'étendant chacun depuis l'un des bords opposés ; dans la configuration traversante les volets d'obturation sont au moins partiellement superposés dans la configuration ouverte les volets d'obturation sont écartés l'un de l'autre.

Préférentiellement, la paroi comprend un premier matériau avec un premier module d'Young, et le bord d'étanchéité comprend un deuxième matériau avec un deuxième module d'Young inférieur au premier module d'Young.

Préférentiellement, l'échancrure de montage comprend un plan général ; dans la configuration traversante le au moins un volet d'obturation est sensiblement parallèle au plan général, et dans la configuration ouverte le au moins un volet d'obturation est incliné par rapport audit plan général.

Préférentiellement, le bord d'étanchéité et le au moins un volet d'obturation sont venus de matière.

Préférentiellement, le au moins un volet d'obturation comprennent au moins une extrémité liée à l'encoche, et au moins une extrémité libre opposée à la au moins extrémité liée.

Selon un autre aspect de l'invention, il est proposé un véhicule automobile comprenant un élément d'étanchéité, remarquable en ce que l'élément d'étanchéité est conforme à l'invention.

Préférentiellement, le véhicule comprend en outre une armature avec un pied central traversant l'échancrure de montage contre le fond de ladite échancrure de montage, et en ce qu'en configuration traversante le ou les volets d'obturation épousent le pied central.

Préférentiellement, l'échancrure de montage comprend deux bords opposés s'étendant de l'entrée au fond ; le au moins un volet d'obturation comprenant deux volets d'obturation s'étendant chacun depuis l'un des bords opposés ; dans la configuration traversante les volets d'obturation sont au moins partiellement superposés, et le pied central comprend une nervure apte à positionner les deux volets d'étanchéité en configuration traversante.

Préférentiellement, le véhicule comprend en outre un pare-chocs avec des moyens de blocage configurés de manière à maintenir le ou les volets d'obturation en configuration traversante.

Préférentiellement, le véhicule présente un module d'entrée d'air piloté avec un échangeur de chaleur coopérant avec l'élément d'étanchéité.

Selon un autre aspect, l'invention propose un procédé d'assemblage d'un véhicule automobile, ledit véhicule automobile comprenant : un échangeur de chaleur, un pare-chocs avec une peau de pare-chocs, une armature avec un pied central destiné à porter la peau de pare-chocs et s'étendant entre l'échangeur de chaleur et la peau de pare-chocs, un élément d'étanchéité apte à canaliser un flux d'air de la peau de pare-chocs à l'échangeur de chaleur ; remarquable en ce que l'élément d'étanchéité est conforme à l'invention, et en ce que le procédé comprend les étapes de : montage de l'élément d'étanchéité dans laquelle le ou les volets d'obturation sont en configuration ouverte ; insertion du pied central dans l'échancrure de montage; déplacement du ou des volets d'obturation depuis la configuration ouverte dans la configuration traversante et contre le pied central de manière à fermer l'échancrure de montage.

Préférentiellement, lors de l'étape de déplacement, le au moins un volet d'obturation pivote d'au moins 30° ; préférentiellement d'au moins 60°.

Préférentiellement, lors de l'étape d'insertion, le pied central glisse le long du ou des volets d'obturation.

Préférentiellement, le procédé comprend en outre une étape de montage de la peau de pare-chocs contre le au moins un volet d'obturation, le volet est comprimé longitudinalement entre la peau de pare-chocs et l'armature.

Dans la présente invention, les caractéristiques s'appliquant généralement aux moyens d'obturation s'appliquent aux volets d'obturation.

Comme on l'aura compris à la lecture de la définition qui vient d'en être donnée, l'invention va doter le cadre d'étanchéité de moyens d'obturation de l'échancrure pratiquée dans un de ses bords qui sont venus de matière avec le bord d'étanchéité. Ces moyens d'obturation sont produits par moulage en même temps que le cadre ce qui diminue les coûts de production, d'installation et le nombre de pièces à référencer par rapport à une solution dans laquelle une pièce d'obturation indépendante est rapportée. Cet aspect améliore également la compacité ainsi que la facilité de montage ; et en particulier l'opération consistant à refermer l'encoche au plus près du pied central. Aussi, les moyens d'obturation bénéficient de la capacité à gérer les flux du bord d'étanchéité.

Le document EP2 332 764 A1 divulgue un élément d'étanchéité de véhicule selon le préambule de la revendication 1. On notera qu'il est connu du document US20210245690A1 un véhicule automobile comprenant un pare-chocs sur lequel est monté un capteur, par exemple un thermomètre. Ce capteur est fixé au pare-chocs grâce à une portion rabattable de ce même pare-chocs. Le maintien du capteur de température dans le pare-chocs est sécurisé par un clip. Cette solution ne permet pas de résoudre le problème sous-jacent à l'invention.

L'invention sera bien comprise et d'autres aspects et avantages apparaîtront clairement à la lecture de la description qui suit donnée en référence aux figures annexées sur lesquelles :
[Fig. 1] La figure 1 schématise un véhicule automobile selon l'invention.
[Fig. 2] La figure 2 montre une portion de bloc façade de véhicule automobile selon un premier mode de réalisation de l'invention ;
[Fig. 3] La figure 3 montre une encoche de montage dans un élément d'étanchéité avec des moyens d'obturation en configuration ouverte selon le premier mode de réalisation de l'invention ;
[Fig. 4] La figure 4 montre l'encoche de montage dans l'élément d'étanchéité avec les moyens d'obturation en configuration traversante selon le premier mode de réalisation de l'invention ;
[Fig. 5] La figure 5 montre des moyens d'obturation d'un élément d'étanchéité selon un deuxième mode de réalisation de l'invention ;
[Fig. 6] La figure 6 montre des moyens d'obturation d'un élément d'étanchéité selon un troisième mode de réalisation de l'invention ;
[Fig. 7] La figure 7 montre un diagramme d'un procédé d'assemblage d'un véhicule automobile selon l'invention.

Dans la description qui suit, le terme « comprendre » est synonyme de « inclure » et n'est pas limitatif en ce qu'il autorise la présence d'autres étapes dans le procédé ou d'autres éléments dans le cadre d'étanchéité ou le véhicule auquel il se rapporte. Il est entendu que le terme « comprendre » inclut les termes « consister en ». Les termes « externe » et « interne » désigneront respectivement ce qui est orienté vers l'extérieur du véhicule et vers l'intérieur du véhicule.

De même, les termes « inférieur », « supérieur », « haut » et « bas » s'entendront selon leur définition usuelle, dans laquelle les termes « inférieur » et « bas » indiquent une proximité avec le sol plus importante selon la direction verticale que respectivement les termes « supérieur » et « haut ».

Dans la présente description, le terme « longitudinal » et le terme « transversal » sont employés selon le référentiel du véhicule, dans la configuration de montage. Le terme « longitudinal » correspond à la direction principale de déplacement du véhicule. Le terme « transversal » correspond à une direction perpendiculaire à la direction principale de déplacement du véhicule.

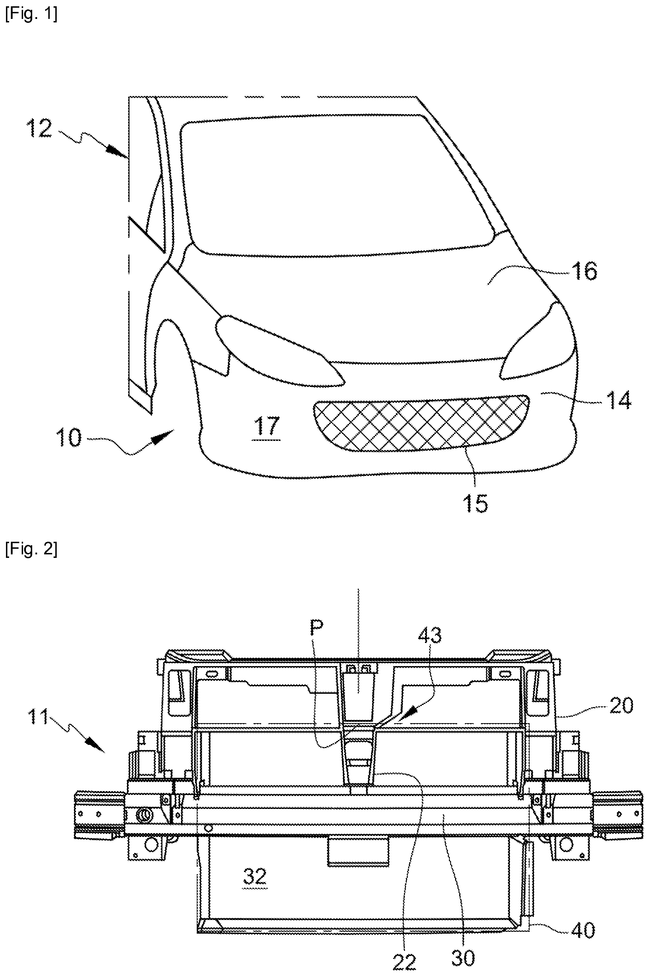

La figure 1 montre un véhicule 10 automobile comprenant une partie avant 12 vue de l'extérieur montre une peau de pare-chocs 14 mise en référence avec d'autres éléments de carrosserie 16 comprenant par exemple un capot, des ailes latérales, etc. Le pare-chocs 14 comprend une grille 15 d'entrée d'air entourée d'une peau 17 de pare-chocs. Ladite peau 17 forme la surface extérieure du véhicule, et affleure le capot et les ailes. Elle délimite le bloc façade avant du véhicule10.

La figure 2 présente une portion de bloc façade avant 11, un dispositif de pare-chocs, ou pare-chocs, comprend une poutre 30 de pare-chocs, transversale et une armature 20 rigide de pare-chocs. L'armature 20 comprend un corps sur lequel est fixée la peau (non représentée) de pare-chocs.

Le bloc façade avant comprend en outre un échangeur de chaleur 32, et un élément d'étanchéité 40 selon un premier mode de réalisation. L'échangeur de chaleur 32 est utilisé afin de refroidir un moteur thermique du véhicule. Alternativement, sa fonction peut servir à la climatisation de l'habitacle du véhicule. Le bloc d'étanchéité forme un cadre qui entoure le l'échangeur de chaleur 32. La forme de cadre peut être généralement rectangulaire. L'élément d'étanchéité 40 forme un manchon disposé devant l'échangeur de chaleur 32, et canalise l'air entrant dans le bloc façade avant 11.

L'armature 20 comprend un pied central 22. Ce dernier s'étend verticalement jusqu'à la poutre 30 et sert de point de fixation pour la peau de pare-chocs (non représentée). Le pied central 22 traverse verticalement l'élément d'étanchéité 40. A cet effet, l'élément d'étanchéité 40 présente une échancrure 43 utilisée pour insérer le pied central 22. L'échancrure de montage 43 est ici horizontale et ouverte vers l'avant ; cependant l'invention envisage d'autres agencements. Elle présente un plan général P, qui est un plan géométrique suivant lequel l'ouverture de l'échancrure de montage 43 est formée. Le plan général P est sensiblement perpendiculaire au pied central 22.

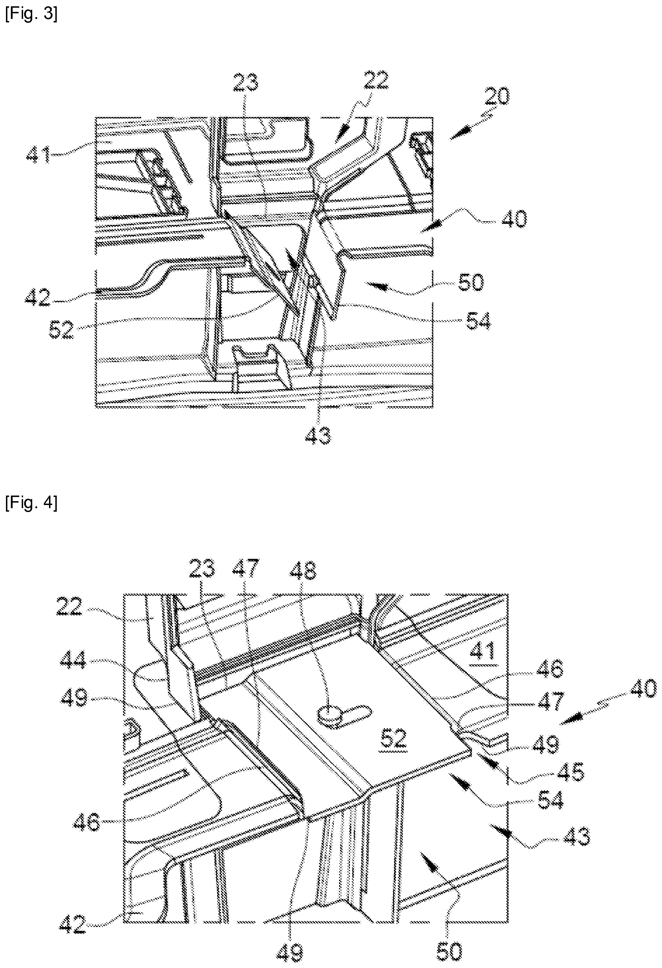

La figure 3 représente l'intersection entre un pied central 22 d'armature 20 et une échancrure 43 d'élément d'étanchéité 40 de véhicule. Le véhicule peut être similaire ou identique à ceux décrits dans les figures précédentes.

L'élément d'étanchéité 40 comprend plusieurs parois 41 formant la structure de cette entité. La paroi 41 est avantageusement en polypropylène, par exemple du PP20A. A son bord avant, la paroi 41 présente un bord d'étanchéité 42. Ce dernier est destiné à venir en contact de la peau de pare-chocs (non représentée) afin de canaliser les flux entrant dans le bloc façade avant. A titre d'illustration, le bord d'étanchéité 42 est réalisé en un matériau plastique présentant des propriétés élastiques, de préférence ; un élastomère choisi parmi un éthylène de propylène de diène (EPDM) ou un élastomère thermoplastique (TPE) ou un latex. Le bord d'étanchéité peut comprendre une lèvre d'étanchéité, préférentiellement avec une variation d'épaisseur ; notamment une réduction d'épaisseur.

La paroi 41 comprend un premier matériau avec un premier module d'Young. Le bord d'étanchéité 42 comprend un deuxième matériau avec un deuxième module d'Young qui est inférieur au premier module d'Young, préférentiellement dix fois inférieur. Les modules d'Young sont mesurés avec des essais de traction, suivant la norme de référence ISO 527-1 : 2019. Pour la paroi 41 ; quel que soit le procédé de fabrication choisi ; l'homme du métier aura avantage à sélectionner une matrice polymère thermoplastique parmi un ou plusieurs matériaux choisis entre le polypropylène (PP), le polyphtalamide (PPA), le polyétheréthercétone (PEEK), polysulfure de phénylène (PPS), le polyamide-imide (PAI), le polyétherimide (PEI), le polyarylamide (PAA), ou le polyamide (PA) tel que par exemple du polyamide 6 (PA 6 ou polycaprolactame) ou du polyamide 6.6 (PA 6.6 ou polyhexaméthylène adipamide).

L'échancrure de montage 43 s'étend longitudinalement dans la paroi 41. Elle est optionnellement bordée par le bord d'étanchéité 42, ce qui permet d'améliorer l'étanchéité et d'absorber les vibrations du pied central 22. La largeur transversale de l'échancrure de montage 43 peut sensiblement correspondre à celle du pied central 22. Le bord d'étanchéité 42 se prolonge transversalement des deux côtés de l'échancrure de montage 43

Le bord d'étanchéité 42 comprend des moyens d'obturation 50 aptes à boucher l'échancrure de montage 43, par exemple au niveau du pied central 22. Les moyens d'obturation 50 comprennent au moins un volet d'obturation, préférentiellement deux volets d'obturation 52 et 54. Dans la présente figure 3, les volets d'obturation 52 et 54 sont en configuration ouverte puisque l'échancrure de montage 43 est au moins partiellement ouverte. Son accès est libre, ou partiellement libre. Son entrée est accessible, et permet d'y introduire le pied central 22. En configuration ouverte, les volets ménagent une brèche dans l'entrée. L'entrée est partiellement dégagée. Les volets d'obturation 52 et 54 sont venus de matière avec le bord d'étanchéité 42 ; par exemple par moulage. Ils bénéficient ainsi des mêmes avantages que le matériau du bord d'étanchéité 42. Verticalement au niveau des volets d'obturation 52 et 54, soit au niveau du plan général P, le pied central 22 comprend préférentiellement une nervure 23 dont le rôle sera explicité ci-après.

Dans la configuration ouverte, les volets d'obturation 52 et 54 sont inclinés par rapport au plan général (non représenté). Leurs angles d'inclinaisons sont compris entre 30° et 90 ; optionnellement entre 45° et 60°. Les volets d'obturation 52 et 54 sont orientés vers le centre de l'élément d'étanchéité 40, ce qui réduit les dimensions du moule employé pour la fabrication de ce dernier, et donc son coût.

La figure 4 représente un agrandissement de l'élément d'étanchéité 40 en figure 3 ; au niveau du croisement de l'échancrure de montage 43 et du pied central 22. La zone d'échancrure de la figure 3 dans laquelle les volets d'obturation 52 et 54 sont en configuration traversante.

L'échancrure de montage 43 comprend un fond 44 à l'opposé de l'entrée 45. Ces deux dernières zones longitudinales sont reliées par deux bords opposés 46 de l'échancrure de montage 43. Les bords 46 transversalement opposés, ou bords latéraux, définissent la largeur interne de l'échancrure de montage 43. Ils bordent le pied central 22, et contribuent se son maintien. Par ailleurs, le pied central 22 est en butée contre le fond 44.

En configuration traversante, les moyens d'obturation 50 traversent transversalement l'échancrure de montage 43. Le plan général est couvert. Les volets d'obturation 52 et 54 couvrent partiellement l'échancrure 43. Ils longent l'entrée 45 et la barrent. L'accès à l'échancrure de montage 43 est physiquement empêché. Au moins un bord de volet prolonge le bord d'étanchéité 42.

En configuration traversante, les volets d'obturation 52 et 54 sont généralement parallèles l'un au l'autre, et notamment parallèles à la paroi 41. Les angles d'inclinaison de la paroi 41 par rapport aux volets d'obturation 52 et 54 peut être sensiblement égal à 0°, éventuellement à +/- 5°. En configuration traversante, les volets d'obturation 52 et 54 sont superposés. Ils se chevauchent transversalement.

Les volets d'obturation (52 ; 54) comprennent des moyens de maintien 48. Une fois engagés, les moyens de maintien 48 permettent de maintenir les volets d'obturation (52 ; 54) en configuration traversante ; en contact l'un de l'autre. Les moyens de maintien 48 peuvent comprendre une fente formée dans un des volets ; et un pion formé sur l'autre des volets et destiné à être inséré dans la fente. Alternativement, les moyens de maintien comprennent de l'adhésif à l'interface de chevauchement des volets.

En configuration traversante, les volets d'obturation (52 ; 54) sont parallèles à la nervure de positionnement 23. La nervure de positionnement 23 est apte à positionner volets d'obturation (52 ; 54) au niveau du plan général P, ce qui permet de les agencer à une position efficace pour gérer les flux d'air.

Les volets d'obturation (52 ; 54) sont mobiles au niveau de charnières 47 le long des bords 46 de l'échancrure de montage 43. Les charnières 47 sont configurées pour permettre des mouvements de pivotement, par exemple selon des axes de pivotement longitudinaux. Les charnières 47 peuvent comprendre des encoches 49. Les encoches 49 impliquent une section réduite augmentant la souplesse. Par ailleurs, les encoches 49 côté fond 44 reçoivent des raidisseurs du pied central 22. Des lors, les fuites sont limitées, et la gestion des flux d'air optimisée.

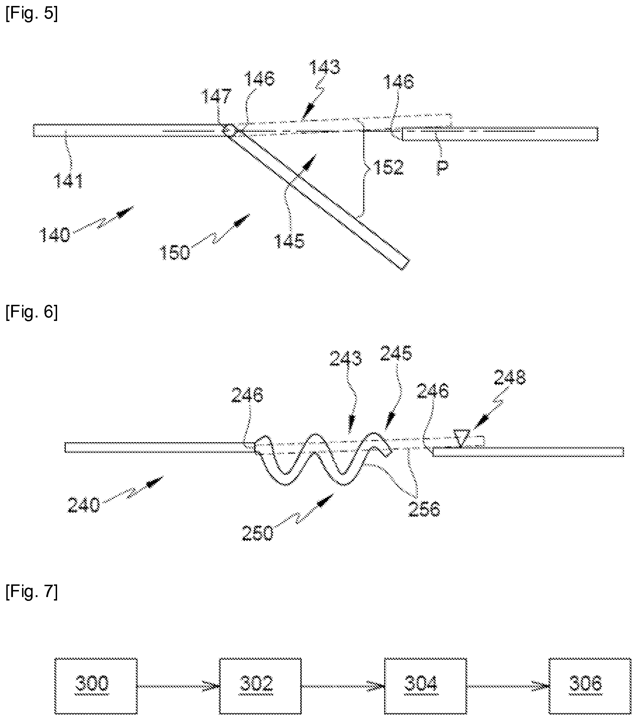

La figure 5 représente une portion d'élément d'étanchéité 140 selon un deuxième mode de réalisation de l'invention. L'élément d'étanchéité 140 est similaire à celui du premier mode de réalisation, et peut être installé dans un véhicule selon les figures précédentes. La présente figure utilise des numéros de référence basés sur ceux du premier mode de réalisation, la numérotation étant incrémentée de 100.

Dans le deuxième mode de réalisation, les moyens d'obturation 150 comprennent un volet d'obturation 152, notamment pivotant. Le volet d'obturation 152 est représenté en trait plein dans la configuration ouverte, et en traits pointillés dans la configuration traversante. En configuration ouverte, le volet d'obturation 152 est incliné par rapport au plan général P. Il s'étend depuis un bord 146, et reste à distance du bord opposé 146. Ainsi l'entrée 145 de l'échancrure de montage 143 reste libre. Elle est ouverte sur toute sa longueur, c'est-à-dire sur toute la largeur de l'échancrure de montage 143. Un pied central (non représenté) peut être introduit en abaissant davantage le volet 152 ; via un pivotement sur la charnière 147.

En configuration traversante, le volet d'obturation 152 est sensiblement parallèle au pan général P. Il traverse l'échancrure de montage 143 d'un bord à l'autre. Grâce à sa surface, il bloque un potentiel flux d'air susceptible de traverser l'échancrure de montage 143. En changeant de configuration, le volet 152 bascule d'une face, par exemple inférieure, de la paroi 141 ; à une face opposée, par exemple supérieure, de la paroi 141. Le volet 152 s'étend depuis un des bords 146, et touche le bord opposé 146. Il est en appui dessus en raison de sa raideur intrinsèque. Cet aspect rend totalement optionnel les moyens de maintien. Toutefois ces derniers peuvent être ajoutés afin d'augmenter le maintien. Le changement de configuration peut s'opérer en pivotant le volet 152 d'un angle d'au moins 20°, préférentiellement au moins 30°.

L'emploi des moyens d'obturation avec un seul volet limite les manipulations nécessaires pour clore l'échancrure.

La figure 6 représente une portion d'élément d'étanchéité 240 selon un deuxième mode de réalisation de l'invention. L'élément d'étanchéité 240 est similaire à celui du premier mode de réalisation, et peut être installé dans un véhicule selon les figures précédentes. La présente figure utilise des numéros de référence basés sur ceux du premier mode de réalisation, la numérotation étant incrémentée de 200.

Dans le troisième mode de réalisation, les moyens d'obturation 250 comprennent un volet d'obturation 256 extensible. Le volet d'obturation 256 est représenté en trait plein dans la configuration ouverte, et en traits pointillés dans la configuration traversante. Le volet 256 est configuré de sorte à se déployer en s'étendant le long de l'entrée 245 de l'échancrure de montage 243.

En configuration ouverte, le volet d'obturation 256 peut comprendre un profil sinusoïdal, ou en accordéon. La paroi formant le volet 256 peut être ondulée. Il est au niveau du plan général P. Il s'étend sur une portion de l'entrée 245. Ainsi, l'entrée 245 reste partiellement libre. Le volet d'obturation 256 s'étend depuis un bord 246, et l'extrémité libre du volet d'obturation 256 reste à distance du bord opposé 246 au précédent. Le fond reste accessible.

En configuration traversante, le volet d'obturation 256 est sensiblement parallèle au pan général P. Il traverse l'échancrure de montage 243 d'un bord 246 à l'autre. Grâce à son étendue à sa surface étanche, il s'oppose à un éventuel flux d'air tentant d'emprunter l'échancrure de montage 243. En changeant de configuration, le volet d'obturation 256 s'allonge. Des moyens de maintien 248 permettent au volet de rester en position lors du changement de configuration.

Des moyens d'obturation avec un volet ondulé permettent d'intégrer ce volet dans l'échancrure en configuration ouverte. A cet emplacement, le volet est facilement accessible d'une face ou de l'autre.

La figure 7 représente un diagramme d'un procédé d'assemblage de véhicule comprenant un élément d'étanchéité. Ce dernier est indistinctement selon le premier, le deuxième ou le troisième mode de réalisation.

Le procédé comprend les étapes suivantes, réalisées dans l'ordre qui suit :
montage 300 de l'élément d'étanchéité dans laquelle le ou chaque volet d'obturation est en configuration ouverte ;
insertion 302 du pied central dans l'échancrure de montage, par exemple en poussant le ou chaque volet de l'échancrure de montage ;
déplacement 304 du au moins un volet d'obturation depuis la configuration ouverte dans la configuration traversante et contre le pied central de manière à fermer l'échancrure de montage ;
montage 306 de la peau de pare-chocs contre les moyens d'obturation.

Lors de l'étape de déplacement 304, au moins un ou chaque volet pivote d'au moins 30° ; préférentiellement d'au moins 60°. A l'issue de l'étape de déplacement 304, les optionnels moyens de maintien sont verrouillés afin de bloquer le ou les volets.

A l'étape montage 306 de la peau de pare-chocs, le volet est comprimé longitudinalement entre la peau et l'armature, ce qui permet de le maintenir. Cette action peut remplacer les moyens de maintien.

Les caractéristiques techniques décrites dans un mode de réalisation peuvent être employées dans les autres modes de réalisation.

## Revendications

1. Elément d'étanchéité (40 ; 140 ; 240) de véhicule (10), ledit élément d'étanchéité présentant une paroi (41 ; 141) formant un cadre, la paroi (41 ; 141) présentant un bord d'étanchéité (42) et une échancrure de montage (43 ; 143 ; 243) dans le bord d'étanchéité (42), ladite échancrure de montage (43 ; 143 ; 243) comprenant une entrée (45; 145 ; 245) et un fond (44) à l'opposé de l'entrée (45; 145 ; 245), **caractérisé en ce que** le bord d'étanchéité (43 ; 143 ; 243) comprend au moins un volet d'obturation (52 ; 54 ; 152 ; 256) mobile entre une configuration ouverte ; et une configuration traversante dans laquelle le au moins un volet (52 ; 54 ; 152 ; 256) traverse l'échancrure de montage (43 ; 143 ; 243) au niveau de l'entrée (45; 145 ; 245), de manière à boucher partiellement l'échancrure de montage (43 ; 143 ; 243).

2. Elément d'étanchéité selon la revendication 1, **caractérisé en ce que** le ou les volets d'obturation (52 ; 54 ; 152 ; 256) comprend/comprennent au moins une charnière avec au moins une encoche (49).

3. Elément d'étanchéité selon l'une des revendications 1 à 2, **caractérisé en ce que** le ou les volets d'obturation (52 ; 54 ; 152 ; 256) comprend/comprennent des moyens de maintien (48 ; 248) aptes à maintenir ledit au moins un volet d'obturation (52 ; 54 ; 152 ; 256) dans la configuration traversante.

4. Elément d'étanchéité selon l'une des revendications 1 à 3, **caractérisé en ce que** l'échancrure de montage (143 ; 243) comprend deux bords opposés (146 ; 246) s'étendant de l'entrée au fond ; et au moins un volet d'obturation est dimensionné pour relier les deux bords opposés (146 ; 246) dans la configuration traversante et en se plaçant en appui sur l'un des deux bords.

5. Elément d'étanchéité selon l'une des revendications 1 à 3, **caractérisé en ce que** l'échancrure de montage (43) comprend deux bords opposés (46) s'étendant de l'entrée au fond ; l'élément d'étanchéité comprenant deux volets d'obturation (52 ; 54) s'étendant chacun depuis l'un des bords opposés ; dans la configuration traversante les volets d'obturation (52 ; 54) sont dimensionnés pour être au moins partiellement superposés.

6. Elément d'étanchéité selon l'une des revendications 1 à 5, **caractérisé en ce que** la paroi (41 ; 141) comprend un premier matériau avec un premier module d'Young, et le bord d'étanchéité (42) comprend un deuxième matériau avec un deuxième module d'Young inférieur au premier module d'Young.

7. Véhicule automobile (10) comprenant un élément d'étanchéité, **caractérisé en ce que** l'élément d'étanchéité (40 ; 140 ; 240) est conforme à l'une des revendications 1 à 6 ; et le véhicule présente un module d'entrée d'air piloté avec un échangeur de chaleur (32) coopérant de manière étanche l'élément d'étanchéité (40 ; 140 ; 240).

8. Véhicule (10) automobile selon la revendication 7, **caractérisé en ce que** le véhicule comprend en outre une armature (20) avec un pied central (22) traversant l'échancrure de montage (43 ; 143 ; 243) contre le fond (44) de ladite échancrure de montage, et **en ce qu'**en configuration traversante le ou les volets d'obturation (50 ; 150 ; 250) épousent le pied central (22).

9. Procédé d'assemblage d'un véhicule automobile, ledit véhicule automobile comprenant : un échangeur de chaleur, un pare-chocs (14) avec une peau de pare-chocs, une armature (20) avec un pied central (22) destiné à portée la peau de pare-chocs et s'étendant entre l'échangeur de chaleur et la peau de pare-chocs, un élément d'étanchéité apte à canaliser un flux d'air de la peau de pare-chocs à l'échangeur de chaleur ; **caractérisé en ce que** l'élément d'étanchéité (40 ; 140 ; 240) est conforme à l'une des revendications 1 à 6, et **en ce que** le procédé comprend les étapes de :
• montage (300) de l'élément d'étanchéité (40 ; 140 ; 240) dans laquelle le ou les volets d'obturation (50 ; 150 ; 250) sont en configuration ouverte ;
• insertion (302) du pied central (22) dans l'échancrure de montage (43 ; 143 ; 243);
• déplacement (304) du ou des volets d'obturation (50 ; 150 ; 250) depuis la configuration ouverte dans la configuration traversante et contre le pied central de manière à fermer l'échancrure de montage.

10. Procédé d'assemblage selon la revendication 9, **caractérisé en ce que** le procédé comprend en outre une étape de montage (306) de la peau de pare-chocs contre le au moins un volet d'obturation (52 ; 54 ; 152 ; 256), le volet d'obturation est comprimé longitudinalement entre la peau de pare-chocs et l'armature.

## Patentansprüche

1. Dichtungselement (40; 140; 240) eines Fahrzeugs (10), wobei das Dichtungselement eine Rahmenwand (41; 141) aufweist, wobei die Wand (41; 141) eine Dichtungskante (42) und eine Verbindungslinienausnehmung (43; 143; 243) in der Dichtungskante (42) aufweist, wobei die Verbindungslinienausnehmung (43; 143; 243) mit einem Einlass (45; 145); 245) und einem Boden (44), der dem Einlass (45; 145; 245) gegenüberliegt, wobei der Dichtungsflansch (43; 143; 243) mindestens einen Verschluss (52; 54; 152; 256) aufweist, der zwischen einer offenen Konfiguration und einer durchgehenden Konfiguration bewegbar ist, durch die der mindestens eine Verschluss (52; 54; 152; 256) hindurchgeht Die Einbuchtung (43; 143; 243) der Montagelinie an der Höhe (45; 145; 245), sodass die Einbuchtung der Montagelinie (43; 143; 243) teilweise verstopft ist.

2. Dichtungselement nach Anspruch 1, **dadurch gekennzeichnet, dass** die Verschlussklappen (52; 54; 152; 256) mindestens ein Scharnier mit mindestens einer Kerbe (49) aufweisen.

3. Dichtungselement nach einem der Ansprüche 1 bis 2, **dadurch gekennzeichnet, dass** die mindestens eine Verschlussklappe (52; 54; 152; 256) Haltemittel (48; 248) aufweist/aufweisen, die geeignet sind, die mindestens eine Verschlussklappe (52; 54; 152; 256) in einer durchgehenden Konfiguration zu halten.

4. Dichtungselement nach einem der Ansprüche 1 bis 3, **dadurch gekennzeichnet, dass** der Verbindungslinienschlitz (143; 243) zwei gegenüberliegende Ränder (146; 246) aufweist, die sich vom Einlass zum Boden erstrecken; und mindestens eine Klappe so bemessen ist, dass sie die beiden gegenüberliegenden Ränder (146; 246) in Durchgangskonfiguration verbindet und sich an einem der beiden Ränder abstützt.

5. Dichtungselement nach einem der Ansprüche 1 bis 3, **dadurch gekennzeichnet, dass** der Verbindungslinienschlitz (43) zwei gegenüberliegende, sich vom Einlass nach unten erstreckende Ränder (46) aufweist; das Dichtungselement zwei Verschlussklappen (52; 54) aufweist, die sich jeweils von einem der gegenüberliegenden Ränder erstrecken; in Durchgangskonfiguration die Verschlussklappen (52; 54) so dimensioniert sind, dass sie zumindest teilweise übereinander liegen.

6. Dichtungselement nach einem der Ansprüche 1 bis 5, **dadurch gekennzeichnet, dass** die Wand (41; 141) ein erstes Material mit einem ersten Young-Modul aufweist und die Dichtungskante (42) ein zweites Material mit einem zweiten Young-Modul aufweist, das kleiner als das erste Young-Modul ist.

7. Kraftfahrzeug (10) mit einem Dichtungselement, wobei das Dichtungselement (40; 140; 240) einem der Ansprüche 1 bis 6 entspricht; und das Fahrzeug eine gesteuerte Lufteinlasseinheit mit einem Wärmetauscher (32) aufweist, der mit dem Dichtungselement (40; 140; 240) dichtend zusammenwirkt.

8. Kraftfahrzeug (10) nach Anspruch 7, **dadurch gekennzeichnet, dass** das Fahrzeug ferner ein Gerüst (20) mit einem Mittelfuß (22) aufweist, der die Montagekettenausnehmung (43; 143; 243) gegen den Boden (44) der Montagekettenausnehmung durchquert, und dass in der Durchgangskonfiguration die eine oder mehreren Schließklappen (50; 150; 250) dem Mittelfuß (22) folgen.

9. Verfahren zum Zusammenbau eines Kraftfahrzeugs, wobei das Kraftfahrzeug umfasst: einen Wärmetauscher, einen Stoßfänger (14) mit einer Stoßfanghaut, einen Rahmen (20) mit einem Mittelschenkel (22) zum Stützen der Stoßfanghaut, der sich zwischen dem Wärmetauscher und der Stoßfanghaut erstreckt, ein Dichtungselement, das einen Luftstrom von der Stoßfanghaut zu dem Wärmetauscher leiten kann; **dadurch gekennzeichnet, dass** das Dichtungselement (40; 140; 240) konform ist Verfahren nach einem der Ansprüche 1 bis 6, **dadurch gekennzeichnet, dass** das Verfahren die folgenden Schritte umfasst:
▪ eine Montagelinie (300) des Dichtungselements (40; 140; 240), in der die mindestens eine Verschlussklappe (50; 150; 250) in offener Konfiguration ist;
▪ Einführen (302) des Mittelfußes (22) in die Montagekettennut (43; 143; 243);
▪ Bewegen (304) der Verschlussklappe bzw. der Verschlussklappen (50; 150; 250) von der offenen Konfiguration in die durchgehende Konfiguration und gegen den Mittelfuß, um die Einkerbung der Montagelinie zu schließen.

10. Montageverfahren nach Anspruch 9, **dadurch gekennzeichnet, dass** das Verfahren ferner einen Montagekettenschritt (306) der Stoßstangenhaut gegen die mindestens eine Verschlussklappe (52; 54; 152; 256) umfasst, wobei die Verschlussklappe in Längsrichtung zwischen der Stoßstangenhaut und dem Rahmen zusammengedrückt wird.

## Claims

1. Sealing element (40; 140; 240) of a vehicle (10), the said sealing item having a wall (41; 141) forming a frame, the wall (41; 141) having a sealing edge (42) and an assembly line notch (43; 143; 243) in the sealing edge (42), the said assembly line notch (43; 143; 243) comprising an entry (45; 145; 245) and a bottom (44) opposite the entry (45; 145; 245), wherein the sealing rim (43; 143; 243) comprises at least one shutter (52; 54; 152; 256) movable between an open configuration; and a through configuration in which the at least one shutter (52; 54; 152; 256) passes through the assembly line notch (43; 143; 243) at the level of the entry (45; 145; 245), so as to partially plug the assembly line notch (43; 143; 243).

2. Sealing element according to Claim 1, **characterised in that** the closure flap or flaps (52; 54; 152; 256) comprise/comprise at least one hinge with at least one notch (49).

3. Sealing element according to one of Claims 1 to 2, **characterised in that** the closure flap or flaps (52; 54; 152; 256) comprise/comprise holding means (48; 248) capable of holding the said at least one closure flap (52; 54; 152; 256) in the through-configuration.

4. Sealing element according to one of Claims 1 to 3, **characterised in that** the assembly line notch (143; 243) comprises two opposite edges (146; 246) extending from the entry to the bottom; and at least one shutter is dimensioned to connect the two opposite edges (146; 246) in the through-configuration and to bear on one of the two edges.

5. Sealing element according to one of Claims 1 to 3, **characterised in that** the assembly line notch (43) comprises two opposite edges (46) extending from the entry to the bottom; the sealing item comprising two closure flaps (52; 54) each extending from one of the opposite edges; in the through configuration, the closure flaps (52; 54) are dimensioned to be at least partially superposed.

6. Sealing element according to one of Claims 1 to 5, **characterised in that** the wall (41; 141) comprises a first material with a first Young's modulus, and the sealing edge (42) comprises a second material with a second Young's modulus less than the first Young's modulus.

7. A motor vehicle (10) comprising a sealing item, wherein the sealing item (40; 140; 240) is in accordance with one of claims 1 to 6; and the vehicle has a controlled air entry unit with a heat exchanger (32) sealingly cooperating with the sealing item (40; 140; 240).

8. Motor vehicle (10) according to Claim 7, **characterised in that** the vehicle further comprises a framework (20) with a central leg (22) passing through the assembly line recess (43; 143; 243) against the bottom (44) of the said assembly line recess, and **in that**, in the through configuration, the closure flap or flaps (50; 150; 250) follow the central leg (22).

9. A method of assembling a motor vehicle, said motor vehicle comprising: a heat exchanger, a bumper (14) with a bumper skin, a frame (20) with a centre leg (22) intended to support the bumper skin and extending between the heat exchanger and the bumper skin, a sealing item capable of channelling an air flow from the bumper skin to the heat exchanger; wherein the sealing item (40; 140; 240) is in accordance with one of Claims 1 to 6, and in that the process comprises the steps of:
·assembly line (300) of the sealing item (40; 140; 240) in which the shutter flap(s) (50; 150; 250) are in an open configuration;
·insertion (302) of the centre foot (22) into the assembly line notch (43; 143; 243);
·moving (304) the one or more shutter flaps (50; 150; 250) from the open configuration into the through configuration and against the centre foot to close the assembly line notch.

10. Method of assembly according to Claim 9, **characterised in that** the method further comprises a step of assembly line (306) of the bumper skin against the at least one closure flap (52; 54; 152; 256), the closure flap being compressed longitudinally between the bumper skin and the frame.
